# EUROPEAN PATENT APPLICATION

(11) **EP 3 031 332 A1**
(43) Date of publication of application: **15.06.2016**
(21) Application number: 14834871.7
(22) Date of filing: 02.07.2014
(51) Int. Cl.: A23C 9/13, A23C 9/00

(54) **COMPOSITION FOR PREPARING SET-TYPE FERMENTED MILK, SET-TYPE FERMENTED MILK, AND METHOD FOR PREPARING SET-TYPE FERMENTED MILK**

(30) Priority: 08.08.2013 KR 20130094276
(71) Applicant: LOTTE Fine Chemical Co., Ltd., Ulsan, 44714 (KR)
(72) Inventor: LEE, Hyun Woo, Incheon 404-310 (KR); LEE, Eun Jung, Seoul 137-797 (KR)
(74) Representative: Kador & Partner
(86) International application number: PCT/KR2014/005923
(87) International publication number: WO 2015/020314

(57) **Abstract**

Disclosed are a composition for preparing set-type fermented milk, set-type fermented milk, and a method of preparing set-type fermented milk. The disclosed composition for preparing set-type fermented milk may include liquid milk, a powder material, and optionally, fermentation fungi, and the powder material may include cellulose ether, and optionally, starch. The disclosed set-type fermented milk includes cellulose ether, thereby preventing quality deterioration, such as serum separation and syneresis, and having remarkable phase stability.

## Description

### TECHNICAL FIELD

The present invention relates to a composition for preparing set-type fermented milk, set-type fermented milk, and a method of preparing the set-type fermented milk, and more particularly to a composition for preparing set-type fermented milk including cellulose ether for preventing quality deterioration, such as syneresis, and having remarkable phase stability, set-type fermented milk, and a method of preparing the set-type fermented milk.

### BACKGROUND ART

Stirred-type fermented milk may be prepared by undergoing a step of culturing lactic acid bacteria, a step of preparing syrup, a step of mixing a lactic acid bacteria culture medium with syrup, a packaging step, and a step of cold storage. Here, syrup denotes processed liquid sugar, prepared by dissolving sugar in water followed by an addition of flavoring thereto. In detail, the stirred-type fermented milk may be prepared by adding commercialized fermentation bacteria to a large-scale fermentor filled with pre-pasteurized milk, culturing the fermentation bacteria, determining the culture completion time by measuring the pH or acidity of the content in the fermentor, completing the culturing of the fermentation bacteria, and further adding other materials, such as syrup, to the fermentor, followed by mixing the resulting mixture.

Set-type fermented milk may also be known as homemade-type yogurt, which is prepared by packaging all of fermented base including fermentation bacteria (i.e., lactic acid bacteria) using a small container, fermenting the fermented base in a fermenting room, and conducting cold storage and releasing the fermented base. Such set-type fermented milk may have a problem in realizing homogeneous physical properties. Further, as in the preparation process of the stirred-type fermented milk, when fermented base is fermented in a large-scale fermentor, heat may be directly transferred from the fermentor to the fermented base via heat-conduction. On the other hand, when preparing set-type fermented milk, once a temperature of a fermenting room is set, heat may be transferred to the product in a container via convection, and thus, there is a problem of long fermentation time, as compared to stirred-type fermented milk. Further, when preparing set-type fermented milk, a large number of product containers are densely placed in a fermenting room, there occurs deviation of heat transfer to each product container. Accordingly, there is a fastidious problem in production of set-type fermented milk, such as quality deviation among the product containers. Due to the problems above, set-type fermented milk is disadvantageous in that its physical properties are inhomogeneous, and syneresis may substantially occur. However, as the need of consumers increasingly diversified and subdivided, homemade products have been recognized as premium products.

Details of the preparation process of fermented milk are as follows: first, fermented base including milk may be pasteurized and cooled. Subsequently, the fermented base may be inoculated with lactic acid bacteria, which is called a starter. Then, the resulting product may be cultured for a certain time period. Here, due to proliferation of lactic acid bacteria, organic acids, such as lactic acid and acetic acid, may be generated in the resulting product. Accordingly, milk may be curdled in the resulting product, showing fermented milk flavor. Here, protein curd including casein may be separated from whey including lactose and whey protein, which are water-soluble and nonprecipitable even at a low pH. This is a very natural phenomenon when preparing fermented milk.

However, in the case of set-type fermented milk in particular, such serum separation or whey off may negatively affect aesthetics and it is not satisfactory to intake the set-type fermented milk since the difference of physical properties between hard curd and a transparent liquid of the upper part (i.e., whey) is great. Therefore, in order to evenly mix a curd portion with a whey portion and suppress layer separation, after fermentation, a stabilizer, e.g., pectin and modified starch, which may well function even at a low pH, is commonly added to the set-type fermented milk. However, conventional set-type fermented milk is disadvantageous in that its quality is not as satisfactory as stirred-type fermented milk.

Accordingly, there is a need for research into a material and process for improving the quality of set-type fermented milk.

### DETAILED DESCRIPTION OF THE INVENTIVE CONCEPT

### TECHNICAL PROBLEM

An exemplary embodiment of the present invention provides a composition for preparing set-type fermented milk including cellulose ether.

Another exemplary embodiment of the present invention provides set-type fermented milk including cellulose ether.

Another exemplary embodiment of the present invention provides a method of preparing the set-type fermented milk.

### TECHNICAL SOLUTION

According to an aspect of an exemplary embodiment, a composition for preparing set-type fermented milk includes:
liquid milk; and
a powder material,
wherein the powder material includes cellulose ether.

The liquid milk may include 9.0 percent by weight to 12.5 percent by weight of solid content.

The liquid milk may include at least one selected from the group consisting of raw milk, whole milk, low-fat milk, non-fat milk, functional milk, and reduced milk

The powder material may include at least one selected from the group consisting of saccharides, milk powder, an excipient, and a flavoring agent.

The excipient may include at least one selected from the group consisting of maltodextrin, amylodextrin, polydextrose, inulin, indigestible carbohydrates, whey protein, whey powder, casein, sodium caseinate, milk protein, whey protein isolate, and dietary fiber.

The flavoring agent may include at least one selected from the group consisting of a fruit flavoring agent, a fermented milk flavoring agent, a cream flavoring agent, and a milk flavoring agent.

The cellulose ether may include hydroxyalkyl alkyl cellulose.

The cellulose ether may include 19 percent by weight to 30 percent by weight of alkoxy group and 4 percent by weight to 20 percent by weight of hydroxy alkoxy group that are substituted in a main chain of cellulose.

The hydroxyalkyl alkyl cellulose may include hydroxypropyl methyl cellulose.

The composition may include the powder material in an amount of 5 parts by weight to 18 parts by weight, based on 100 parts by weight of the liquid milk.

The powder material may include the cellulose ether in an amount of 0.2 part by weight to 0.5 part by weight, based on 100 parts by weight of the liquid milk.

The powder material may further include starch in an amount of 1.0 part by weight to 3.0 parts by weight, based on 100 parts by weight of the liquid milk.

According to another aspect of an exemplary embodiment,

set-type fermented milk includes cellulose ether, and is prepared by fermenting the composition for preparing set-type fermented milk with fermentation fungi.

The set-type fermented milk may further include starch.

According to another aspect of an exemplary embodiment, a method of preparing set-type fermented milk includes:
a step of obtaining a first solution by dissolving a powder material in liquid milk (S10);
a step of obtaining a second solution by pasteurizing the first solution (S20);
a step of obtaining a third solution by homogenizing the second solution (S30);
a step of obtaining a fourth solution by cooling the third solution (S40); and
a step of inoculating the fourth solution with fermentation fungi and fermenting the fourth solution by culturing the fermentation fungi (S50).

The temperature of the liquid milk in the step (S10) may be in a range of 0°C to 15°C.

The pasteurizing in the step (S20) may be carried out by heating the first solution at a temperature in a range of 80°C to 90°C for 5 minutes to 16 minutes.

The homogenizing in the step (S30) may be carried out under a pressure of 150 bar to 250 bar.

The cooling in the step (S40) may be performed until the temperature of the fourth solution reaches a temperature in a range of 35°C to 45°C.

The culturing in the step (S50) may be carried out at a temperature in a range of 35°C to 45°C for 6 hours to 18 hours.

### ADVANTAGEOUS EFFECTS

Set-type fermented milk according to an exemplary embodiment includes cellulose ether, thereby preventing quality deterioration, such as whey off and syneresis, and having remarkable phase stability.

### DESCRIPTION OF THE DRAWINGS

FIG. 1 is a flowchart illustrating a method of preparing set-type fermented milk, according to an exemplary embodiment of the present invention.
FIG. 2 is a flowchart illustrating a method of preparing set-type fermented milk, according to the conventional art.

### BEST MODE

Hereinafter a composition for preparing set-type fermented milk according to an exemplary embodiment of the present invention will be described in detail. In the present specification, "set-type fermented milk" refers to a product prepared by placing and packaging all of a composition for preparing fermented milk containing fermentation fungi in a small container, and then fermenting the composition for preparing fermented milk.

The composition for preparing set-type fermented milk according to an exemplary embodiment of the present invention may include liquid milk and a powder material, wherein the powder material may include cellulose ether.

The liquid milk may include 9.0 percent by weight to 12.5 percent by weight of solid content.

The liquid milk may include at least one selected from the group consisting of raw milk, whole milk, low-fat milk, non-fat milk, functional milk, and reduced milk

The raw milk denotes unprocessed milk taken from a milk cow.

The whole milk denotes milk prepared from the raw milk without removing fat, but the milk is prepared by commercially pasteurizing the raw milk at a temperature in a range of 120°C to 140°C for several seconds or pasteurizing the raw milk at a low temperature, e.g., at 63°C for 30 minutes or at 72°C for 15 seconds. The whole milk may include milk fat of 3 percent by weight or more.

The low-fat milk denotes milk prepared by removing a part of a milk fat component from the raw milk, and, for example, a content of the milk fat component in the low-fat milk may be in a range of 1/2 to 1/100 of its original content in the raw milk. The low-fat milk may include milk fat of 2 percent by weight or less.

The non-fat milk denotes milk prepared by removing all of a milk fat component from the raw milk.

The functional milk denotes milk having enhanced functionality prepared by adding various functional components, e.g., calcium and docosa hexaenoic acid (DHA), to whole milk.

The reduced milk denotes milk prepared by dissolving at least one selected from the group consisting of whole milk powder, skim milk powder, and whey powder, in water, and, optionally, followed by additional sterilization and pasteurization process. Examples of the reduced milk include reduced whole milk and reduced low-fat milk. In the preparation of the reduced milk, contents of the whole milk powder and the skim milk powder may be appropriately chosen. For example, in the preparation of the reduced whole milk, 12 wt% of the whole milk powder may be used (i.e., 12 g of the whole milk powder is dissolved in 88 g of water). For example, in the preparation of the reduced low-fat milk, 10 wt% of the skim milk powder may be used (i.e., 10 g of the skim milk powder is dissolved in 90 g of water).

Unlike other types of liquid milk, the reduced milk uses milk powder of a powder state during the storage and distribution stages. Thus the reduced milk has many advantages in terms of its expiration date and ease of handling. However, the reduced milk is generally treated at an extremely high temperature compared with liquid milk products, and thus a degree of denaturization of protein is high.

The amount of the powder material may be 5 parts by weight to 18 parts by weight, based on 100 parts by weight of the liquid milk. When the amount of the powder material is within this range, the set-type fermented milk may have non-high calories, without whey off and deterioration of mouthfeel.

The powder material may include at least one selected from the group consisting of saccharides, milk powder, an excipient, and a flavoring agent. In particular, the powder material may be a premix of two or more of the above ingredients.

The saccharides may include at least one selected from the group consisting of sucrose, glucose, fructose, maltose, lactose, and galactose. The fructose may include at least one of crystalline fructose and liquid fructose.

The amount of the saccharides may be 5 parts by weight to 10 parts by weight, based on 100 parts by weight of the liquid milk. When the amount of the saccharides is within this range, the set-type fermented milk may have sour taste and sweet taste that are not too strong, and thus, the set-type fermented milk may be functionally good and have non-high calories.

The milk powder may include at least one selected from the group consisting of whole milk powder, skim milk powder, and whey powder.

The amount of the milk powder may be 4 parts by weight to 8 parts by weight, based on 100 parts by weight of the liquid milk. When the amount of the milk powder is within this range, the set-type fermented milk may have non-high calories, without whey off and deterioration of mouthfeel.

The excipient may include at least one selected from the group consisting of maltodextrin, amylodextrin, polydextrose, inulin, indigestible carbohydrates, whey protein, casein, sodium caseinate, milk protein, whey protein isolate, and other dietary fiber. The other dietary fiber may include at least one selected from the group consisting of fibersol, chicory dietary fiber, oat dietary fiber, wheat dietary fiber, soybean dietary fiber, psyllium husk, barley dietary fiber, sugarcane fiber, gums, and fructo-oligosaccharides.

The amount of the excipient may be 0 part by weight to 5 parts by weight, based on 100 parts by weight of the liquid milk. When the amount of the excipient is within this range, the set-type fermented milk may have good flavor, without deterioration of physical properties of protein curd and deterioration of mouthfeel. In the present specification, "curd" is coagulum, which denotes a material constituting set-type fermented milk with whey. In the present specification, "whey" denotes a transparent or pale white solution.

The flavoring agent may include at least one selected from the group consisting of a fruit flavoring agent, a fermented milk flavoring agent, a cream flavoring agent, and a milk flavoring agent.

The amount of the flavoring agent may be 0 part by weight to 0.3 part by weight, based on 100 parts by weight of the liquid milk. When the amount of the flavoring agent is within this range, the set-type fermented milk may have more good flavor, without sense of difference.

The cellulose ether may have water holding capacity and emulsifying capacity. Accordingly, the cellulose ether may prevent the set-type fermented milk, which is formed by fermenting the composition for preparing set-type fermented milk, from whey off and syneresis. In other words, the cellulose ether is a stabilizer, which improves phase stability of the set-type fermented milk.

The cellulose ether may include hydroxyalkyl alkyl cellulose. The cellulose ether may include 19 percent by weight to 30 percent by weight of alkoxy group and 4 percent by weight to 20 percent by weight of hydroxy alkoxy group that are substituted in a main chain of cellulose. The hydroxyalkyl alkyl cellulose may include hydroxypropyl methyl cellulose. The cellulose ether may be dissolved in water to prepare a cellulose ether aqueous solution having a concentration of 2 percent by weight at a temperature of 20°C. Then, the viscosity of the cellulose ether aqueous solution may be measured using a digital viscometer Brookfield DV-II (USA). The measured viscosity may be in a range of 400 centipoise (cps) to 100,000 cps.

The amount of the cellulose ether may be 0.2 part by weight to 0.5 part by weight, based on 100 parts by weight of the liquid milk. When the amount of the cellulose ether is within this range, the phase stability of the composition for preparing set-type fermented milk may be excellent. In addition, excessive increase of viscosity thereof may be prevented, thereby obtaining set-type fermented milk having good mouthfeel.

The composition for preparing set-type fermented milk may further include starch.

The starch, like cellulose ether, is a stabilizer, which improves phase stability of the set-type fermented milk.

The starch may include at least one of general starch and modified starch.

The general starch may include at least one selected from the group consisting of potato starch, sweet potato starch, corn starch, wheat starch, rice starch, sago starch, tapioca starch, barley starch, red bean starch, pea starch, and kudzu starch.

The modified starch denotes starch having different physical properties than those of general starch by treating the general starch chemically, physically, or enzymatically.

The modified starch may include at least one selected from the group consisting of acid-treated starch, oxidized starch, crosslinking starch, starch ether, starch ester, pregelatinized starch, pearl starch, crystal starch, powdered starch, and lump starch.

The acid-treated starch may be prepared by suspending the general starch in a hydrochloric acid solution or a sulfuric acid solution to obtain a suspension and by stirring the suspension, followed by neutralizing, washing, purifying, and drying the suspension when the suspension reaches a predetermined viscosity.

The oxidized starch may be prepared by adding the general starch to water to mix the general starch with the water, followed by strongly oxidizing the general starch with a chlorine-based oxidizer, e.g., sodium hypochlorite, at a temperature equal to or less than a gelatinization temperature, washing the oxidized starch with water, removing the oxidizer, and then drying the oxidized starch.

The crosslinking starch may be prepared by crosslinking the general starch by using a crosslinking agent, such as glyoxal.

The starch ether may include at least one selected from the group consisting of carboxymethyl starch, hydroxyalkyl starch, cationic starch, and amphoteric starch. The hydroxyalkyl starch may include hydroxypropyl starch.

The starch ester may include at least one selected from the group consisting of starch acetate, acetylated distarch adipate, starch phosphate, and starch sodium octenyl succinate. The starch phosphate may include at least one selected from the group consisting of acetylated distarch phosphate, distarch phosphate, monostarch phosphate, phosphated distarch phosphate, and hydroxypropyl distarch phosphate.

The pregelatinized starch may be prepared by mixing the general starch with water, heating the mixture to prepare a paste, and then rapidly dehydrating the paste for drying.

The pearl starch may be prepared by drying the general starch at a temperature of about 77°C for about 22 hours.

The crystal starch may be prepared by densely filling the general starch in a cubic mold and then drying the general starch for 1 hour, followed by pulverizing the general starch.

The powdered starch may be prepared by pulverizing and sieving the pearl starch.

The lump starch may be prepared by treating the powdered starch with steam and high pressure.

The amount of the start may be 1.0 part by weight to 3.0 parts by weight, based on 100 parts by weight of the liquid milk. When the amount of the starch is within this range, the phase stability of the composition for preparing set-type fermented milk may be excellent. In addition, excessive increase of viscosity thereof may be prevented, thereby obtaining set-type fermented milk having good mouthfeel.

The composition for preparing set-type fermented milk may further include fermentation fungi.

The fermentation fungi may include, not particularly limited to, at least one lactic acid bacteria selected from the group consisting of *Streptococcus thermophilus, Lactobacillus delbrueckii* subsp. *Bulgaricus, Lactobacillus acidophilus, Lactobacillus delbrueckii* subsp. *Lactis, Bifidobacterium Lactis,* and *Lactobacillus plantum.*

The concentration of the fermentation fungi in the composition for preparing set-type fermented milk may be 0.000075 sales unit (SU)/ ml to 0.0002 SU/ ml, i.e., the initial number of fermentation fungi may be 10⁶ colony forming unit (CFU)/ ml to 10⁸ CFU/ ml. When the concentration of the fermentation fungi is within this range, fermentation time may be reduced, thereby increasing productivity and lowering the cost burden. In the present specification, "SU" denotes a unit of the quantities of strain defined by Christian Hansen A/S.

As for the fermentation fungi, an ABT-5 mixed strain (available from Christian Hansen A/S) may be used. The ABT-5 mixed strain is a product where three strains *(Lactobacillus acidophilus LA-5, Bifidobacterium Lactis BB-12,* and *Streptococcus thermophillus)* are mixed with each other and undergo freeze-drying, and then packaged. The ABT-5 mixed strain is packaged into individual products in an amount of 15 SU, so that the individual product may be used to correspond to 150 kg of fermented base. In the present specification, "fermented base" denotes in a portion except for the fermentation fungi in the composition for preparing set-type fermented milk, i.e., a mixture solution of the liquid milk and the powder material. Since the ABT-5 mixed strain is packaged into individual products in a large amount (that is, 15 SU), as described above, the three strains may not be homogeneously distributed throughout the individual product. Therefore, when the ABT-5 mixed strain is used, the individual product may be opened, and then its whole content may be completely dissolved in 1 L to 2 L of sterilized saline solution to prepare a mixed strain solution. Only 45 mL to 55 mL thereof may be taken therefrom so as to add the taken mixed strain solution to 1 kg of fermented base, i.e., inoculation. In another method, the individual product of the ABT-5 mixed strain may be opened, and then its whole content may be completely pulverized to prepare strain powder. The amount of the strain powder corresponding to 0.5 SU may be weighed in a clean bench so as to add the weighed strain powder to 1 kg of fermented base. In still another method, a plain-type thick fermented milk product sold in the market may be added to the fermented base at a ratio of 5 percent by weight to 10 percent by weight, based on 100 parts by weight of the fermented base.

Hereinafter set-type fermented milk according to an exemplary embodiment of the present invention will be described in detail.

The set-type fermented milk according to an exemplary embodiment of the present invention may be prepared by fermenting the composition for preparing set-type fermented milk with fermentation fungi. The set-type fermented milk may include cellulose ether.

The set-type fermented milk may further include the starch.

The set-type fermented milk may have a pH of 4.25 to 4.35 and an acidity of 0.66 to 0.86. In the present specification, "acidity" denotes the amount (percent by weight) of lactic acid included in the set-type fermented milk, which is measured based on the milk product acidity test stated in "Standard for processing and ingredient specifications of livestock products".

The set-type fermented milk may have both the intrinsic flavor of fermented milk and the peculiar physical properties of the curd where the milk proteins were strongly agglomerated.

Hereinafter, with reference to the drawings, the method of preparing set-type fermented milk, according to an exemplary embodiment of the present invention, will be described in detail.

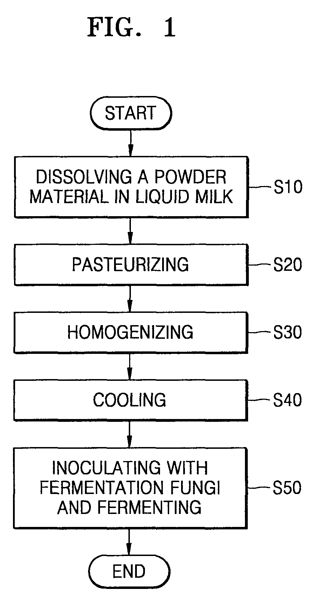

Referring to FIG. 1, the method of preparing set-type fermented milk, according to an exemplary embodiment, may include a step of obtaining a first solution by dissolving a powder material in liquid milk (S10); a step of obtaining a second solution by pasteurizing the first solution (S20); a step of obtaining a third solution by homogenizing the second solution (S30); a step of obtaining a fourth solution by cooling the third solution (S40); and a step of inoculating the fourth solution with fermentation fungi and fermenting the fourth solution by culturing (i.e., culturing the fermentation fungi) (S50).

The liquid milk, the powder material, and the fermentation fungi are the same as described above in relation to the composition for preparing set-type fermented milk. Thus, detailed description thereof will not be repeated.

The temperature of the liquid milk in the step (S10) may be in a range of 0°C to 15°C.

The pasteurizing in the step (S20) may be carried out by heating the first solution at a temperature in a range of 80°C to 90°C for 5 minutes to 16 minutes. When the pasteurizing temperature and pasteurizing time is within this range, sufficient pasteurization effect may be obtained without breaking of advantageous ingredients to a human body.

The homogenizing in the step (S30) may be carried out under a pressure of about 150 bar to about 250 bar. The homogenizing may be performed in a high pressure homogenizer.

The cooling in the step (S40) may be performed until the temperature of the fourth solution reaches a temperature in a range of about 35°C to about 45°C.

The product resulting from the inoculating in the step (S50) may be charged in a pasteurized fermentation container. Then, the fermentation container may be sealed and moved to a fermenting room to perform the culturing in the step (S50).

The culturing in the step (S50) may be carried out at a temperature in a range of 35°C to 45°C (the temperature of the fermenting room) for 6 hours to 18 hours.

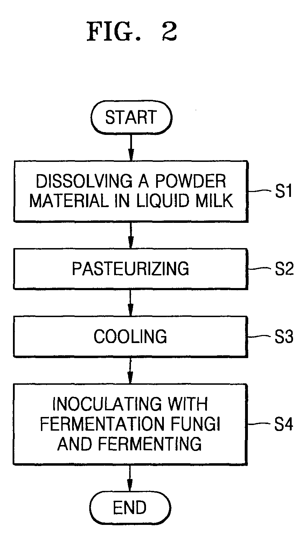

For reference, with reference to FIG. 2, a method of preparing set-type fermented milk, according to the conventional art, will be described in detail.

Referring to FIG. 2, the method of preparing set-type fermented milk, according to the conventional art, may include a step of obtaining a first solution by dissolving a powder material in liquid milk at a temperature in a range of 55°C to 60°C (S1); a step of obtaining a second solution by pasteurizing the first solution (S2); a step of obtaining a third solution by cooling the second solution (S3); and a step of inoculating the third solution with fermentation fungi and fermenting the third solution by culturing (i.e., culturing the fermentation fungi) (S4). As illustrated in FIG. 2, the method of preparing set-type fermented milk, according to the conventional art, may not include a step of homogenizing.

Hereinafter the present invention will be described in detail with reference to Examples; however, the present invention is not limited thereto.

### Example

### Comparative Examples 1 and 2 and Example 1

Based on the method shown in FIG. 1, set-type fermented milk was prepared as follows. First, the solid materials shown in Table 1 were quantified, mixed, and stirred to prepare a powder material. Then, the powder material was added in small amounts to whole milk (available from Seoul milk, solid content: 12 percent by weight, milk fat content: 3 percent by weight) that was cooled to 10°C, while stirring, thereby completely dissolving the powder material in the whole milk. As a result, a first solution was obtained. Subsequently, the first solution was pasteurized by heating up to a temperature of 85°C and maintaining the temperature for 10 minutes. As a result, a second solution was obtained. Then, the second solution was homogenized using a continuous homogenizer (available from Soavi-Niro, NS1001H) under a homogenization pressure of 200 bar. As a result, a third solution was obtained. Subsequently, the third solution was cooled to a temperature of 40°C. As a result, a fourth solution was obtained. Subsequently, 0.1 SU of an ABT-5 mixed strain (available from Christian Hansen A/S) was dissolved in 0.9 percent by weight of a sterilized saline solution to prepare 10 g of a mixed strain solution. Thereafter, 10 g of the mixed strain solution was added to 1 kg of the fourth solution in a clean bench. As a result, a fifth solution was obtained. Then, the fifth solution was, to avoid formation of bubbles, carefully stirred for 3 minutes to completely mixing the fifth solution. As a result, a sixth solution was obtained. Subsequently, ten transparent PET plastic containers having a cap (the containers were washed with 70 percent by weight of ethanol and then dried) were each charged with 100 g of the sixth solution, and then the cap was closed. Then, the ten plastic containers were moved to a fermenting room of an internal temperature of 42°C. The intervals between the plastic containers were sufficiently maintained for homogeneous air circulation and heat transfer, thereby fermenting the content of each plastic container (i.e., the sixth solution) for 12 hours. As a result, 10 units of set-type fermented milk were obtained from each Comparative Examples 1 and 2 and Example 1. Each set-type fermented milk had a pH of 4.26±0.02 and an acidity of 0.76±0.01.

### Comparative Examples 3 and 4 and Referential Example 1

Based on the method shown in FIG. 1, set-type fermented milk was prepared as follows. First, the solid materials shown in Table 1 were quantified, mixed, and stirred to prepare a powder material. Then, the powder material was added in small amounts to whole milk (available from Seoul milk, solid content: 12 percent by weight, milk fat content: 3 percent by weight) that was heated to 60□, while stirring, thereby completely dissolving the powder material in the whole milk. As a result, a first solution was obtained. Subsequently, the first solution was pasteurized by heating up to a temperature of 85°C and maintaining the temperature for 25 minutes. As a result, a second solution was obtained. Subsequently, the second solution was cooled to a temperature of 40°C. As a result, a third solution was obtained. Subsequently, 0.1 SU of an ABT-5 mixed strain (available from Christian Hansen A/S) was dissolved in 0.9 percent by weight of a sterilized saline solution to prepare 10 g of a mixed strain solution. Thereafter, 10 g of the mixed strain solution was added to 1 kg of the third solution in a clean bench. As a result, a fourth solution was obtained. Then, the fifth solution was, to avoid formation of bubbles, carefully stirred for 3 minutes to completely mixing the fourth solution. As a result, a fifth solution was obtained. Subsequently, 10 transparent PET plastic containers having a cap (the containers were washed with 70 percent by weight of ethanol and then dried.) were each charged with 100 g of the fifth solution, and then the cap was closed. Then, the ten plastic containers were moved to a fermenting room of an internal temperature of 42°C. The intervals between the plastic containers were sufficiently maintained for homogeneous air circulation and heat transfer, thereby fermenting the content of each plastic container (i.e., the fifth solution) for 12 hours. As a-result, 10 units of set-type fermented milk were obtained from each Comparative Examples 3 and 4 and Referential Example 1. Each set-type fermented milk had a pH of 4.27±0.02 and an acidity of 0.76±0.02.

**[Table 1]**

| | | Comparative Example 1/ Comparative Example 3 | Comparative Example 2/ Comparative Example 4 | Example 1/ Referential Example 1 |
|---|---|---|---|---|
| Whole milk | | 89.5 | 88 | 87.7 |
| Powder material (parts by weight) | Sugar*1 | 5 | 5 | 5 |
| | Skim milk powder*2 | 2.5 | 2.5 | 2.5 |
| | Whey powder*3 | 2 | 2 | 2 |
| | Starch*4 | 0 | 1.5 | 1.5 |
| | HPMC*5 | 0 | 0 | 0.3 |
| | Subtotal | 9.5 | 11 | 11.3 |
| Mixed strain solution (parts by weight) | | 1 | 1 | 1 |
| Total (parts by weight) | | 100 | 100 | 100 |

| | | | | |
|---|---|---|---|---|
| *1: Baekseolpyo white sugar available from CJ *2: Seoul milk *3: Whey powder 95 (whey powder 95 percent by weight, maltodextrin 5 percent by weight) available from Seokang dairy & food Co., Ltd, *4: Hydroxypropyl diphosphoric acid starch available from National Starch & Chemical Co., Ltd *5: AnyAddy^{®}HPMC 2208 available from Samsung Fine Chemicals Co., Ltd. | | | | |

### Evaluation Example 1: Curd formation, pH, and acidity Evaluation

The curd formation, pH, and acidity of the set-type fermented milk prepared in Comparative Examples 1 to 4, Example 1, and Referential 1 were evaluated based on the following method. The evaluation result is shown in Table 2.

### (Curd formation evaluation)

Curd formation in each of the set-type fermented milk was evaluated through observing with the naked eye.

### (pH evaluation)

pH of each of the set-type fermented milk was measured by using a pH meter (Fisher Scientific Co., Ltd, Accumet AB15).

### (Acidity evaluation)

The acidity of each of the set-type fermented milk was measured based on the milk product acidity test stated in "Standard for processing and ingredient specifications of livestock products".

**[Table 2]**

| | Comparative Example | | | | Example 1 | Referential Example 1 |
|---|---|---|---|---|---|---|
| | 1 | 2 | 3 | 4 | | |
| Curd formation | Formed | Formed | Formed | Formed | Formed | Not formed |
| pH | 4.27 | 4.25 | 4.25 | 4.26 | 4.26 | 4.26 |
| Acidity (percent by weight) | 0.76 | 0.75 | 0.75 | 0.76 | 0.76 | 0.76 |

Referring to Table 2, curd formation was found in the set-type fermented milk prepared in Comparative Examples 1 to 4 and Example 1; however, curd formation was not found in the set-type fermented milk prepared in Referential Example 1. In addition, it was found that the set-type fermented milk prepared in Comparative Examples 1 to 4, Example 1, and Referential Example 1 had similar pH and acidity with one another, implying that the degree of fermentation was similar with one another.

### Examples 2 to 6

10 units of set-type fermented milk for each of Examples 2 to 6 were prepared in the same manner as in Comparative Examples 1 and 2 and Example 1, except that materials shown in Table 3 were used instead of the materials shown in Table 1. Each set-type fermented milk had a pH of 4.26±0.02 and an acidity of 0.76±0.01. The sugar, skim milk powder, whey powder, starch, and HPMC are the same as those in Table 1.

**[Table 3]**

| | | Example 2 | Example 3 | Example 4 | Example 5 | Example 6 |
|---|---|---|---|---|---|---|
| Whole milk (parts by weight) | | 88.2 | 87.2 | 87.8 | 87.6 | 85.7 |
| Powder material (parts by weight) | Sugar | 5 | 5 | 5 | 5 | 5 |
| | Skim milk powder | 2.5 | 2.5 | 2.5 | 2.5 | 2.5 |
| | Whey powder | 2 | 2 | 2 | 2 | 2 |
| | Chicory dietary fiber*6 | 0 | 0 | 0 | 0 | 1 |
| | Polydextrose*7 | 0 | 0 | 0 | 0 | 1 |
| | Starch | 1 | 2 | 1.5 | 1.5 | 1.5 |
| | HPMC | 0.3 | 0.3 | 0.2 | 0.4 | 0.3 |
| | Subtotal | 10.8 | 11.8 | 11.2 | 11.4 | 13.3 |
| Mixed strain solution (parts by weight) | | 1 | 1 | 1 | 1 | 1 |
| Total (parts by weight) | | 100 | 100 | 100 | 100 | 100 |

| | | | | | | |
|---|---|---|---|---|---|---|
| *6: Orafti-LT available from Beneo-Orafti S.A *7: Polydextrose available from Samyang Genex Co., Ltd | | | | | | |

### Comparative Examples 5 and 6 and Examples 7 and 8

10 units of set-type fermented milk for each of Comparative Examples 5 and 6 and Examples 7 and 8 were prepared in the same manner as in Comparative Examples 1 and 2 and Example 1, except that materials shown in Table 4 were used instead of the materials shown in Table 1. Each set-type fermented milk had a pH of 4.20±0.02 and an acidity of 0.76±0.01. The sugar, skim milk powder, whey powder, chicory dietary fiber, polydextrose, starch, and HPMC are the same as those in Table 1 or 3.

**[Table 4]**

| | | Comparative Example 5 | Comparative Example 6 | Example 7 | Example 8 |
|---|---|---|---|---|---|
| Low-fat milk *8 (parts by weight) | | 89.5 | 88 | 87.7 | 85.7 |
| Powder material (parts by weight) | Sugar | 5 | 5 | 5 | 5 |
| | Skim milk powder | 2.5 | 2.5 | 2.5 | 2.5 |
| | Whey powder | 2 | 2 | 2 | 2 |
| | Chicory dietary fiber | 0 | 0 | 0 | 1 |
| | Polydextrose | 0 | 0 | 0 | 1 |
| | Starch | 0 | 1.5 | 1.5 | 1.5 |
| | HPMC | 0 | 0 | 0.3 | 0.3 |
| | Subtotal | 9.5 | 11 | 11.3 | 13.3 |
| Mixed strain solution (parts by weight) | | 1 | 1 | 1 | 1 |
| Total (parts by weight) | | 100 | 100 | 100 | 100 |

| | | | | | |
|---|---|---|---|---|---|
| *8: Seoul milk, solid content: 10 percent by weight, milk fat content: 1 percent by weight | | | | | |

### Evaluation Example 2: Evaluation of physical properties over time

The set-type fermented milk prepared in Comparative Examples 1 and 2, Comparative Examples 5 and 6, and Examples 1 to 8 was stored at a temperature of 5°C for 14 days. The pH, texture, whey off, and syneresis were evaluated over time during the storage, based on the following method. The evaluation results are shown in Tables 6 to 8. The texture may be subdivided into firmness, consistency, and cohesiveness.

### (pH evaluation)

The pH of each of the set-type fermented milk was measured in the same manner as in Evaluation Example 1.

### (Texture evaluation)

The texture of each of the set-type fermented milk was measured using a texture analyzer (available from Stable Micro System Ltd, TA.TXPlus). The measurement condition was as in Table 5.

**[Table 5]**

| Texture Analyzer (Stable Micro System 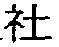 TA.TXPlus) | |
|---|---|
| Texture analysis | Firmness, consistency, cohesiveness |
| Test mode | Measure force in compression |
| Test speed | 1.0mm/sec |
| Probe | P20 (20mm dia. Cylinder aluminum) |
| Target mode | Distance |
| Distance | 5mm |

**[Table 6]**

| Index of Evaluation | pH | | Texture | | | | | |
|---|---|---|---|---|---|---|---|---|
| | 1st day | 14th day | Firmness (g) | | Consistency (g·sec) | | Cohesiveness (g) | |
| | | | 1st day | 14th day | 1st day | 14th day | 1st day | 14th day |
| Comparativ e Example 1 | 4.27 | 4.07 | 71.83 | 70.05 | 304.02 | 300.21 | -53.79 | -52.18 |
| Comparativ e Example 2 | 4.26 | 4.06 | 60.08 | 62.23 | 267.02 | 265.23 | -37.59 | -35.23 |
| Example 1 | 4.25 | 4.05 | 147.55 | 143.77 | 610.53 | 605.33 | -86.08 | -85.35 |
| Example 2 | 4.25 | 4.06 | 149.06 | 145.35 | 570.92 | 565.28 | -88.43 | -85.23 |
| Example 3 | 4.26 | 4.09 | 130.65 | 132.22 | 568.19 | 564.18 | -78.74 | -80.12 |
| Example 4 | 4.25 | 4.08 | 122.84 | 125.33 | 547.62 | 543.22 | -75.08 | -78.35 |
| Example 5 | 4.24 | 4.06 | 131.19 | 130.28 | 578.59 | 575.35 | -94.45 | -92.14 |
| Example 6 | 4.25 | 4.08 | 115.21 | 117.43 | 501.05 | 498.13 | -73.40 | -73.56 |
| Comparativ e Example 5 | 4.20 | 4.05 | 59.83 | 61.05 | 244.89 | 240.65 | -43.92 | -41.12 |
| Comparativ e Example 6 | 4.17 | 4.03 | 66.52 | 63.52 | 257.95 | 249.11 | -39.98 | -40.33 |
| Example 7 | 4.22 | 4.01 | 74.54 | 75.33 | 252.72 | 248.12 | -52.53 | -54.23 |
| Example 8 | 4.21 | 4.03 | 74.54 | 72.22 | 252.72 | 250.76 | -52.53 | -55.12 |

Referring to Table 6, the set-type fermented milk prepared in Examples 1 to 8 were found to have similar pH value with the set-type fermented milk prepared in Comparative Examples 1, 2, 5, and 6, in the first day. Furthermore, the pH value of the set-type fermented milk prepared in Examples 1 to 8, Comparative Examples 1 and 2, and Comparative Examples 5 and 6 in 14th day were found to be lower than the pH value thereof measured in the first day by 0.15 to 0.21. This may result from that each of the set-type fermented milk was after-fermented, forming an organic acid. Since there is no difference of the pH value change over time between the set-type fermented milk prepared in Comparative Examples 1, 2, 5, and 6 and the set-type fermented milk prepared in Example 1 to 8, HPMC may not affect the proliferation of microorganism (i.e., fermentation fungi). In the cases that whole milk was used as liquid milk, the set-type fermented milk prepared in Examples 1 to 6 had improved firmness, consistency, and cohesiveness, as compared with the set-type fermented milk prepared in Comparative Examples 1 and 2. In the cases that low-fat milk was used as liquid milk, the set-type fermented milk prepared in Examples 7 and 8 had improved firmness and cohesiveness and similar consistency, as compared with the set-type fermented milk prepared in Comparative Examples 5 and 6. This may result from that consistency improving effect due to the emulsifying capacity of HPMC was less exhibited in low-fat milk, in which milk fat content is small, than whole milk, in which milk fat content is large.

### (Whey off evaluation)

When each of the set-type fermented milk was refrigerated at a temperature of 5°C, whey off occurrence over time was observed with the naked eye for evaluation. In addition, the separated whey was extracted using a dropping pipette to measure a weight thereof. Cumulative whey off rate over time was calculated.

**[Table 7]**

| | Cumulative whey off rate, based on the total weight of the set-type fermented milk (percent by weight) | | | |
|---|---|---|---|---|
| Duration | 1st day | 5th day | 10th day | 14th day |
| Comparative Example 1 | 0 | 2 | 3 | 4 |
| Comparative Example 2 | 0 | 1 | 2 | 3 |
| Example 1 | 0 | 0 | 0 | 0 |
| Example 2 | 0 | 0 | 0 | 0 |
| Example 3 | 0 | 0 | 0 | 0 |
| Example 4 | 0 | 0 | 0 | 0 |
| Example 5 | 0 | 0 | 0 | 0 |
| Example 6 | 0 | 0 | 0 | 0 |
| Comparative Example 5 | 0 | 2 | 3 | 5 |
| Comparative Example 6 | 0 | 1 | 2 | 3 |
| Example 7 | 0 | 0 | 0 | 0 |
| Example 8 | 0 | 0 | 0 | 0 |

Referring to Table 7, it was found that the set-type fermented milk prepared in Examples 1 to 8 exhibited no whey off even in the 14th day. On the other hand, it was found that the set-type fermented milk prepared in Comparative Examples 1, 2, 5, and 6 exhibited a steady increase of cumulative whey off rate over time.

### (Syneresis evaluation)

A syneresis amount of a 14th day sample of each of the set-type fermented milk was measured as follows. First, a portion (1.5 g to 1.6 g) of each of the set-type fermented milk was carefully taken out of the sample using a micro spoon. As a result, each of the set-type fermented milk had a groove. Then, water, which was separated from each of the set-type fermented milk in which the groove was formed and filled the groove, was extracted using a dropping pipette to checkweigh. Thus, a cumulative syneresis amount over time was measured.

**[Table 8]**

| Cumulative syneresis amount (g) | Duration (min) | | | | | | |
|---|---|---|---|---|---|---|---|
| | 0 | 5 | 10 | 15 | 20 | 25 | 30 |
| Comparative Example 1 | 0.00 | 0.05 | 0.13 | 0.22 | 0.29 | 0.34 | 0.40 |
| Comparative Example 2 | 0.00 | 0.02 | 0.07 | 0.15 | 0.19 | 0.27 | 0.32 |
| Example 1 | 0.00 | 0.00 | 0.00 | 0.00 | 0.00 | 0.00 | 0.00 |
| Example 2 | 0.00 | 0.00 | 0.00 | 0.00 | 0.00 | 0.00 | 0.00 |
| Example 3 | 0.00 | 0.00 | 0.00 | 0.00 | 0.00 | 0.00 | 0.00 |
| Example 4 | 0.00 | 0.00 | 0.00 | 0.00 | 0.00 | 0.00 | 0.00 |
| Example 5 | 0.00 | 0.00 | 0.00 | 0.00 | 0.00 | 0.00 | 0.00 |
| Example 6 | 0.00 | 0.00 | 0.00 | 0.00 | 0.00 | 0.00 | 0.00 |
| Comparative Example 5 | 0 | 0.14 | 0.29 | 0.38 | 0.48 | 0.55 | 0.62 |
| Comparative Example 6 | 0 | 0.04 | 0.12 | 0.21 | 0.28 | 0.35 | 0.41 |
| Example 7 | 0 | 0 | 0 | 0 | 0 | 0 | 0 |
| Example 8 | 0 | 0 | 0 | 0 | 0 | 0 | 0 |

Referring to Table 8, it was found that the set-type fermented milk prepared in Examples 1 to 8 exhibited no whey off even in the 14th day. On the other hand, it was found that the set-type fermented milk prepared in Comparative Examples 1, 2, 5, and 6 exhibited a steady increase of cumulative syneresis amount over time.

While the inventive concept has been particularly shown and described with reference to exemplary embodiments thereof, it will be understood that various changes in form and details may be made therein without departing from the spirit and scope of the following claims.

## Claims

1. A composition for preparing set-type fermented milk, the composition comprising:
liquid milk; and
a powder material,
wherein the powder material comprises cellulose ether.

2. The compound of claim 1, wherein the liquid milk comprises at least one selected from the group consisting of raw milk, whole milk, low-fat milk, non-fat milk, functional milk, and reduced milk, and the powder material comprises at least one selected from the group consisting of saccharides, milk powder, an excipient, and a flavoring agent, wherein the excipient comprises at least one selected from the group consisting of maltodextrin, amylodextrin, polydextrose, inulin, indigestible carbohydrates, whey protein, whey powder, casein, sodium caseinate, milk protein, whey protein isolate, and dietary fiber.

3. The compound of claim 1, wherein the cellulose ether comprises hydroxyalkyl alkyl cellulose.

4. The composition of claim 3, wherein the cellulose ether comprises 19 percent by weight to 30 percent by weight of an alkoxy group and 4 percent by weight to 20 percent by weight of a hydroxy alkoxy group that are substituted in a main chain of cellulose.

5. The composition of claim 3, wherein the hydroxyalkyl alkyl cellulose comprises hydroxypropyl methyl cellulose.

6. The compound of claim 1, further comprising the powder material in an amount of 5 parts by weight to 18 parts by weight, based on 100 parts by weight of the liquid milk.

7. The composition of claim 6, wherein the powder material comprises the cellulose ether in an amount of 0.2 part by weight to 0.5 part by weight, based on 100 parts by weight of the liquid milk.

8. The composition of claim 6, wherein the powder material further comprises starch in an amount of 1.0 part by weight to 3.0 parts by weight, based on 100 parts by weight of the liquid milk.

9. Set-type fermented milk comprising cellulose ether, prepared by fermenting the composition for preparing set-type fermented milk according to one of claims 1 to 8 with fermentation fungi.

10. The set-type fermented milk of claim 9, further comprising starch.

11. A method of preparing set-type fermented milk, the method comprising:
a step of obtaining a first solution by dissolving a powder material in liquid milk (S10);
a step of obtaining a second solution by pasteurizing the first solution (S20);
a step of obtaining a third solution by homogenizing the second solution (S30);
a step of obtaining a fourth solution by cooling the third solution (S40); and
a step of inoculating the fourth solution with fermentation fungi and fermenting the fourth solution by culturing the fermentation fungi (S50).

12. The method of claim 11, wherein a temperature of the liquid milk in the step (S10) is in a range of 0°C to 15°C.

13. The method of claim 11, wherein the homogenizing in the step (S30) is carried out under a pressure of 150 bar to 250 bar.
